(19) Europäisches Patentamt
European Patent Office
Office européen des brevets

(11) **EP 4 328 706 A1**

(12) **EUROPEAN PATENT APPLICATION**

(43) Date of publication:
**28.02.2024 Bulletin 2024/09**

(21) Application number: **22192389.9**

(22) Date of filing: **26.08.2022**

(51) International Patent Classification (IPC):
***G06F 1/10*** *(2006.01)*      ***H04B 1/00*** *(2006.01)*
***H04B 7/0413*** *(2017.01)*

(52) Cooperative Patent Classification (CPC):
**G06F 1/10; H04B 1/0007**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **INTEL Corporation**
**Santa Clara, CA 95054 (US)**

(72) Inventors:
• **THALLER, Edwin**
 **9583 Faak am See (AT)**
• **HUBER, David Marcel**
 **9560 Feldkirchen in Kärnten (AT)**

(74) Representative: **2SPL Patentanwälte PartG mbB**
**Landaubogen 3**
**81373 München (DE)**

(54) **METHOD AND SYSTEM FOR CLOCK DISTRIBUTION FOR MULTI-DEVICE SYNCHRONIZATION**

(57) A method and system for clock distribution for multi-device synchronization. The system may include a plurality of transceiver devices that are coupled in a daisy chain. A phase-locked loop, PLL, reference clock signal and an external system reference clock signal are supplied to a first transceiver device in the daisy chain. The first transceiver device sends a first system reference clock signal in a forward direction on the daisy chain based on the external system reference clock signal and a last transceiver device in the daisy chain sends a second system reference clock signal in a reverse direction on the daisy chain in response to reception of the first system reference clock signal. Each transceiver device measures transition times of the first and second system reference clock signals, computes an average transition time, and generates a radio frequency clock signal based on the average transition time.

FIG. 3

**Description**

**Background**

Common trends in wireless transceivers are increased radio frequency (RF) frequencies and bandwidth, improved coverage and throughput, higher data rates, lower latency, better energy efficiency, or the like. These requirements are addressed by the adoption of massive multiple-input multiple-output (MIMO) and beamforming techniques. Typical working frequencies of massive MIMO radios are 2.6 GHz and above. These frequencies have degraded penetration inside buildings and difficulties to reach outdoor areas, resulting in the requirement for small cells and large cell count. Therefore, the availability of cost effective and easy to install small cells are a key for wide enablement of Fifth Generation (5G) wireless communication systems.

The large number of antennas in a beamforming massive MIMO system are usually arranged as an array. Each antenna of the antenna array requires precise control of amplitude and phase of the RF signal during transmission and reception. This necessitates precisely phase controlled RF transmitter/receiver (TX/RX) chains. Each TX/RX chain comprises an analog-to-digital converter (ADC) for the RX direction and a digital-to-analog converter (DAC) for the TX direction. All the converters (e.g., ADCs and DACs) within the system need to be precisely aligned in phase with respect to the RF clock signal (e.g., a converter sampling clock for direct RF-sampling ADC/DAC, a mixer clock for mixer-based transceivers, etc.), the converter (ADC/DAC) device clock, the digital data (e.g., data and numerically controlled oscillators (NCOs) in digital up-converter/digital down-converter (DUC/DDC)). The phase needs to be long-term stable and deterministic over temperature variation and power up/down cycles. This requirement necessitates a solution for reliable and deterministic multi-chip synchronization with accuracy, for example in the range of about 5 ps for the phase alignment of the TX RF signal.

**Brief description of the Figures**

Some examples of apparatuses and/or methods will be described in the following by way of example only, and with reference to the accompanying figures, in which

FIG. 1 shows one example scheme of multi-chip synchronization for a multi-chip system;
FIG. 2 shows an example multi-chip synchronization scheme implemented in a massive multiple-input multiple-output (MIMO) system that is built based on multi-channel transceiver system-on-chips (SoCs);
FIG. 3 is a schematic diagram of a transceiver system in accordance with one example;
FIG. 4 is a schematic block diagram of an example transceiver device coupled to RF front-end circuitry;
FIG. 5 is a timing diagram of the system reference clock signals transmitted on the daisy chain;
FIG. 6 shows propagation of the first and second system reference clock signals on a transmission line and the signal propagation delay of the first and second system reference clock signals;
FIG. 7A shows an example implementation of the system with an 8×8 antenna array;
FIG. 7B shows an example clocking scheme for the 8×8 antenna array shown in FIG. 7A;
FIG. 8A shows an example implementation of the system with a 16×16 antenna array;
FIG. 8B shows an example clocking scheme for the 16×16 antenna array as shown in FIG. 8A;
FIGS. 9 and 10 show one example of clock distribution in a multi-device system;
FIGS. 11 and 12 show another example of clock distribution in a multi-device system;
FIGS. 13 and 14 show another example of clock distribution in a multi-device system;
FIG. 15 is a flow diagram of an example method for clock distribution for multi-device synchronization;
FIG. 16 illustrates a user device in which the examples disclosed herein may be implemented; and
FIG. 17 illustrates a base station or infrastructure equipment radio head in which the examples disclosed herein may be implemented.

**Detailed Description**

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

A large number of converters (e.g., ADCs and DACs) and processing components may be distributed over multiple transceiver devices (e.g., integrated circuit (IC) chips or packages) in a transceiver system. Each transceiver device may include at least one ADC and at least one DAC and a dedicated phase-locked loop (PLL) for locally generating an RF clock signal(s). The RF clock signals generated by the PLL in each transceiver device may be RF converter sampling clock signals (for direct RF-sampling systems) or RF local oscillator (LO) signals for mixers (for direct conversion transceiver systems), etc. The RF clock signals generated by the PLLs of the transceiver devices need to be coherent across the system.

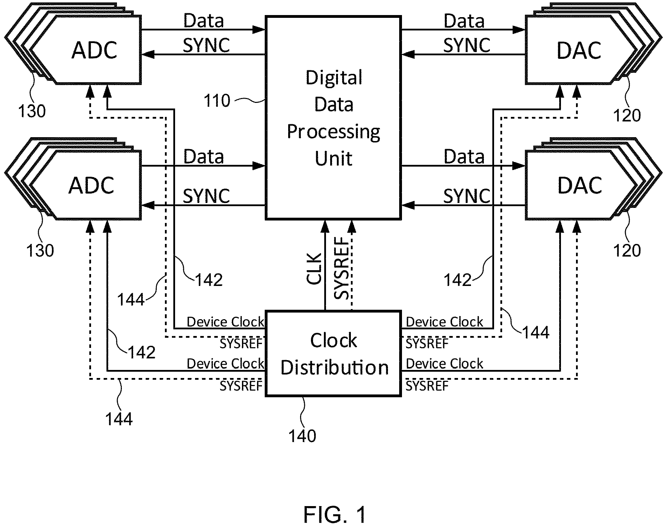

FIG. 1 shows one example scheme of multi-chip synchronization for a multi-chip system (e.g., a massive MIMO system). A data processing unit 110 transmits and receives data to and from a plurality of DACs 120 and ADCs 130, respectively. The clock distribution block 140 generates and distributes a device clock and a system reference clock (SYSREF) to the data processing unit 110, the ADCs 130, and the DACs 120. In this implementation, the device clocks 142 and the system reference clock signals (SYSREF) 144 for the plurality of converters (i.e., ADCs 130 and DACs 120) and the data processing unit 110 are distributed in a delay matched way. The device clocks 142 can be either the converter sampling clocks or a PLL reference clock for generating the converter sampling clocks in case of integrated PLLs. Synchronization among the converters 120, 130 and the data processing unit 110 is implemented over the system reference clock signals (SYSREF) which are also distributed delay matched. The system reference clock signal (SYSREF) 144 is sampled with the device clock 142 on the converter side and with a digital clock in the data processing unit 110. The device clock and the digital clock in the data processing unit 110 need to be properly aligned with the system reference clock (SYSREF) to meet the setup/hold time requirement at the sampling point of the system reference clock. In this example, the alignment may be achieved through clock distribution buffers with a programmable delay as part of the clock distribution.

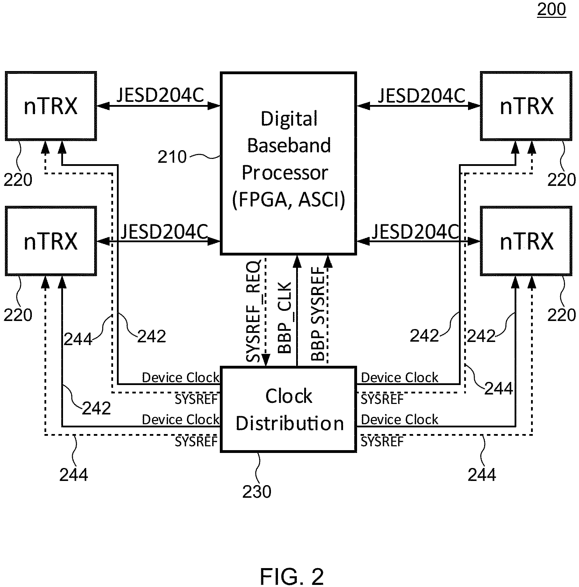

The demand for many TX and RX channels in a current massive MIMO and beamforming wireless transceivers is addressed by complex RF transceiver system-on-chips (SoCs) containing multiple wideband ADCs and DACs monolithically integrated with digital signal processing (DSP) blocks and frequency synthesizers (PLLs). FIG. 2 shows an example multi-chip synchronization scheme implemented in a massive MIMO system that is built based on multi-channel transceiver SoCs. The system 200 includes a plurality of transceiver devices 220 (e.g., SoCs). A digital baseband processor 210 transmits/receives to/from a plurality of transceiver devices 220. The clock distribution block 230 generates device clocks 242 (either sampling clocks for the converters or PLL reference clocks for the integrated frequency synthesizers), a digital clock for the digital baseband processor 210, and system reference clock signals (SYSREF) 244 for the transceiver chips 220. In this system, the device clock signals and the system reference clock signals are distributed in a delay-matched way.

The multi-chip/device synchronization requirements are the same as described above for the system in FIG. 1. The multi-chip/device synchronization scheme needs to fulfill the following target application requirements: 1) phase alignment of the device clocks (converter sampling clocks, frequency synthesizer reference clocks, baseband processor clock), 2) individual PLL/frequency synthesizer phase adjustment possibility for compensation of thermal gradients within the system, 3) a system reference clock with individually programmable delay for proper alignment to the device clocks to meet setup/hold timing, and 4) a clock distribution scheme with a clock tree that can provide the SYSREF pulse to all integrated circuit devices within the same sample clock cycle.

Conventional systems need complex clock distribution scheme based on delay matched printed circuit board (PCB) traces and a dedicated clock distribution chip with programmable delay clock buffers to meet setup/hold timing. Complexity increases rapidly with the number of TX/RX channels due to difficult routing for complex delay matched clock tree and increased bill of material (BOM) for clock distribution buffers. Dynamic temperature changes and gradients require re-adjustment of individual SYSREF delays (tracked within SoC if timing is in an allowed range). Phase alignment of synthesizer clocks is achieved in two steps: measurement of phase mismatch among TX channels of different TRX SoCs via an external feedback loop and adjustment of phase of individual synthesizers to align the phases of the TX channels. Temperature of synthesizers is tracked, and phase is adjusted based on known characteristic.

Hereafter, examples are disclosed for a novel low complexity clock distribution scheme in a multi-device (multi-chip) system for enabling system-wide robust multi-device synchronization. For example, the system and the method for clock distribution for synchronization disclosed herein are applicable to a system including multiple transceiver devices/chips (e.g., transceiver SoCs) including a plurality of ADCs and DACs which need to operate deterministic, synchronous and phase aligned as required, for example in phased arrays and massive MIMO beamforming RF transceivers. The examples will be explained with reference to a multi-device transceiver system including a plurality of transceiver devices. It should be noted that the system and method disclosed hereinafter are applicable to any system comprising a plurality of devices that need phase-aligned clock signals. In examples, the system includes a plurality of transceiver devices, in general devices, (e.g., integrated circuit (IC) chips). Hereafter, the terms "device" and "chip" will be used interchangeably. The "device" may be an IC package including multiple IC chips. The transceiver device may be an SoC containing multiple wideband ADCs and DACs monolithically integrated with digital signal processing (DSP) circuitries and/or a frequency synthesizer (e.g., an analog or digital PLL).

In examples, the transceiver devices (in general, devices) are coupled in a daisy chain, and a PLL reference clock signal and a system reference clock signal (synchronization signal) for the transceiver devices are routed via the daisy chain. With simple daisy chain routing for the PLL reference clock signal and the system reference clock signal, no delay matched/aligned clock distribution tree is needed. Phase alignment of the PLL reference clock signals between the transceiver devices and to the system reference clock signal is not required either. With the example schemes, no dedicated clock distribution buffers are required. The phase of the RF clocks in the transceiver SoCs are aligned (automatically) with the system reference clock signal. The phase of the digital clock in the data processing unit is also aligned (automatically) with the system reference clock signal. The clock distribution scheme in accordance with the examples disclosed herein reduces the system complexity, bill of material for external clock distribution devices and improves phase stability over temperature gradients, resulting in less frequent re-calibration.

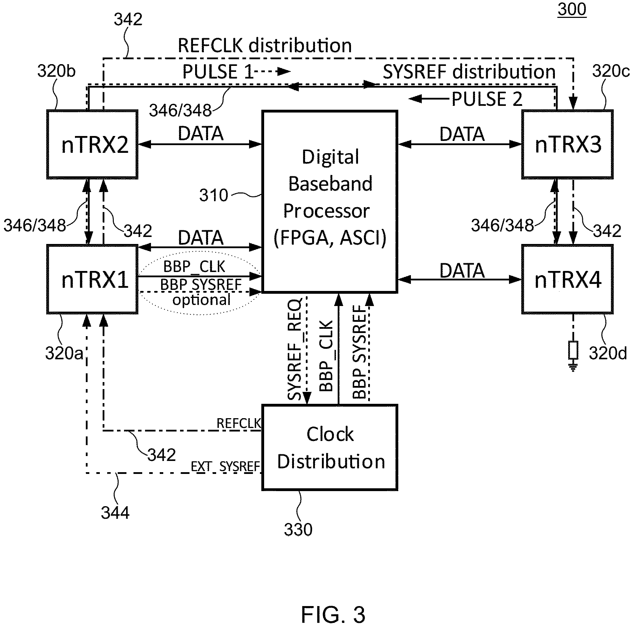

FIG. 3 is a schematic diagram of a transceiver system in accordance with one example. The system 300 may include a plurality of transceiver devices 320a-320d (devices in general), and a clock generator 330. As stated above, the system 300 is not limited to a transceiver system but may be any system comprising a plurality of devices that need phase-aligned clock signals. The system 300 may optionally include a digital baseband processor 310. Each transceiver device 320a-320d may be a multi-channel transceiver SoC that includes a plurality of transmit chains and a plurality of receive chains. The transmit/receive chains are a chain of processing components/circuitries for transmit/receive processing including a DAC, an ADC, an amplifier, a filter, etc. Each transceiver device 320a-320d may be a single package including one or more IC chips/SoCs. The plurality of transceiver devices 320a-320d may be distributed across multiple packages. The system 300 may be included in a base station radio transceiver system.

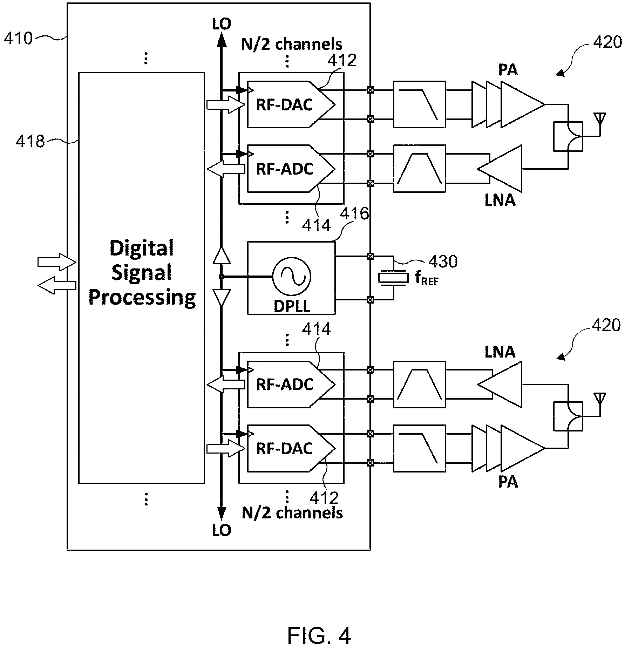

The transceiver device 320a-320d may be an RF transceiver SoC containing at least one ADC and at least one DAC that are monolithically integrated with digital signal processing circuitries and a frequency synthesizer (e.g., a PLL). FIG. 4 is a schematic block diagram of an example transceiver device 410 coupled to RF front-end circuitry 420. In this example, the transceiver device 410 includes a plurality of direct RF-sampling data converters (ADCs 414 and DACs 412), an integrated digital phase-locked loop (DPLL) 416 or alternatively analog PLL for RF clock generation and a digital signal processor 418. A plurality of direct RF-sampling ADCs 414 and DACs 412 may be integrated on a single die with the DPLL 416 and the digital signal processor 418. The transceiver device 410 includes multiple transmit and receive channels (chains) (N channels (chains)). Each transmit channel includes a DAC 412 to convert a digital signal to an analog signal to be transmitted via the RF front-end 420. Each receive channel includes an ADC 414 to convert an analog signal received via the RF front-end 420 to a digital signal. The ADCs 414 and DACs 412 may be direct RF-sampling converters. The ADCs 414 and DACs 412 run at a sampling rate (e.g., up to 16 GHz) and may enable direct sampling or synthesis of RF signals at certain frequencies (e.g., up to about 6 GHz). The direct sampling ADCs 414 and DACs 412 may replace conventional RF components like mixers, local oscillators, and amplifiers. The transceiver device 410 may include a DPLL 416 (alternatively analog PLL) for RF clock generation and a digital signal processor 418 for baseband processing of the transmit/receive signals. The DPLL 416 may generate an RF clock signal based on a reference clock signal 430 and the system reference clock signal (not shown) and supplies a sampling clock to the ADCs 414 and DACs 412 and an RF clock signal to other processing components in the transceiver device 410.

Referring again to FIG. 3, the digital baseband processor 310 transmits/receives data to/from the plurality of transceiver devices 320a-320d. The clock generator 330 generates a PLL reference clock signal 342 and an external system reference clock signal 344 (EXT_SYSREF) for the transceiver devices 320a-320d. The clock generator 330 also generates a digital clock signal (BBP CLK) and a system reference clock signal (BBP_SYSREF) for the digital baseband processor 310. The PLL reference clock signal 342 is a reference for the frequency synthesizer (PLL) in each transceiver device 320a-320d. The external system reference clock signal (EXT_SYSREF) 344 is a system-wide phase synchronization signal in a multi-transceiver system. All transceiver devices 320a-320d need to be phase aligned, for example for phase control of the MIMO or beamforming signals from the MIMO or beamforming antenna. The transceiver devices 320a-320d may be time-aligned using the system reference clock signal 344, for example in a picosecond level. The external system reference clock signal (EXT_SYSREF) 344 has long-term deterministic phase relation across all devices (transceivers) in the system. For example, the system reference clock signal (EXT_SYSREF) 344 may be a low frequency system clock for baseband processing, RF data frame synchronization, etc.

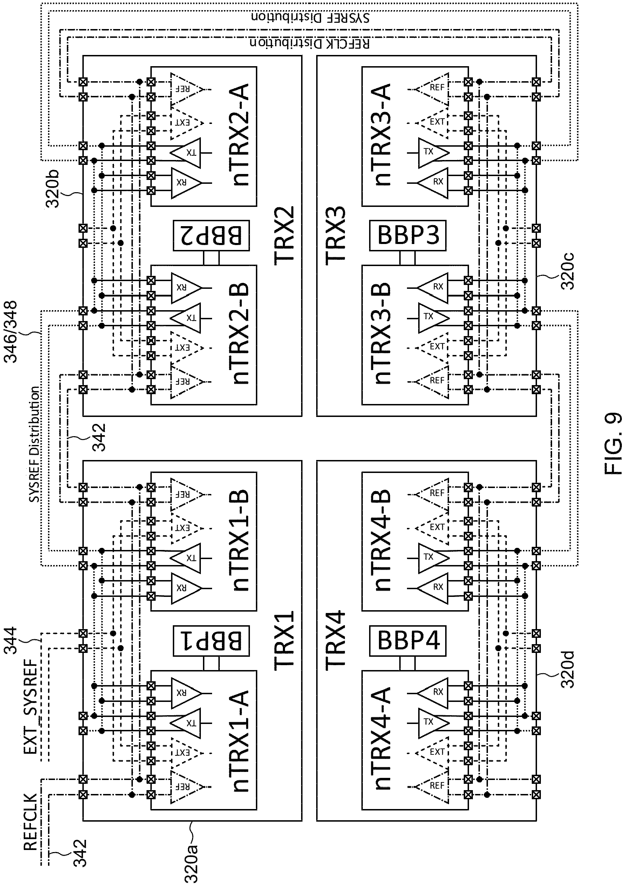

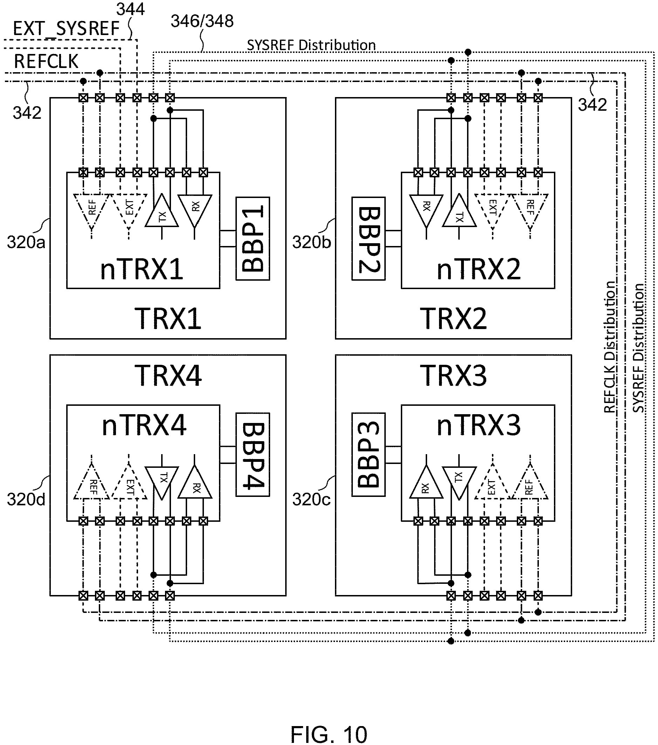

In examples, the transceiver devices 320a-320d are coupled in a daisy chain. A plurality of transceiver devices 320a-320d may be coupled in series from the first transceiver device 320a to the last transceiver device 320d. For example, the first transceiver device 320a is coupled to the second transceiver device 320b, the second transceiver device 320b is coupled to the third transceiver device 320c, and the third transceiver device 320c is coupled to the fourth transceiver device 320d. Alternatively, the transceiver devices 320a-320d may be coupled to a serial transmission line/bus in a tapped way. In other words, the PLL reference clock signal (REFCLK) 342 and/or the system reference clock signals (SYSREF) 346/348 may be distributed via passive differential transmission lines and the transceiver devices may be connected in a daisy chain way. For example, the (differential) transmission line enters the package of the first transceiver device, continues through the package and then exits the package to be continued on a PCB to the next package and so on to the last package (e.g., as shown in FIG. 9). Alternatively, the transceiver devices may be connected to the transmission lines in a tapped way (e.g., as shown in FIG. 10). Throughout the description, the term "daisy chain" is used to include both cases described above. It should also be noted that all drawing figures and corresponding description refer to only four transceiver devices 320a-320d coupled in a daisy chain as an example, but the number of transceiver devices coupled in a daisy chain can be more or less than four, and any number of transceiver devices may be coupled in a daisy chain.

The system reference clock signal 346/348, or alternatively both the PLL reference clock signal 342 and the system reference clock signal 346/348 may be routed to the transceiver devices 320a-320d via simple daisy chain routing. No delay matched/aligned clock distribution tree is required, but two differential transmission lines (e.g., 100Ω) on a PCB level may be used for routing the PLL reference clock signal 342 and the system reference clock signal 346/348 (synchronization signal). Both the system reference clock signal 346/348 and the PLL reference clock signal 342 may be distributed on a differential transmission line (e.g., 100 Ω impedance) on PCB level. In examples, the transmission line length matching between consecutive transceiver devices 320a-320d is not required. Length mismatch may be compensated through averaging of the arrival times of the system reference clock signals 346/348 in each of the transceiver devices 320a-320d connected to the transmission line, which will be explained in detail below.

The clock generator 330 generates and supplies the PLL reference clock signal 342 (REFCLK) and the external system reference clock signal 344 (EXT_SYSREF) to the first transceiver device 320a in the daisy chain. The PLL reference clock signal 342 may propagate to the transceiver devices 320a-320d on the daisy chain.

After receiving the external system reference clock signal 344, the first transceiver device 320a generates and sends a first system reference clock signal (PULSE1) 346 in a forward direction toward the last transceiver device (320d in this example) on the daisy chain. The first system reference clock signal 346 is generated based on the external system reference clock signal (EXT_SYSREF) 344. The first system reference clock signal 346 propagates toward the last transceiver device 320d on the daisy chain and all transceiver devices 320b-320d on the daisy chain detect the first system reference clock signal 346. After receiving the first system reference clock signal 346, the last transceiver device (320d in this example) on the daisy chain generates and sends a second system reference clock signal (PLTLSE2) 348 in a reverse direction toward the first transceiver device 320a on the daisy chain. The second system reference clock signal 348 propagates toward the first transceiver device 320a on the daisy chain and all transceiver devices 320a-320c on the daisy chain detect the second system reference clock signal 348.

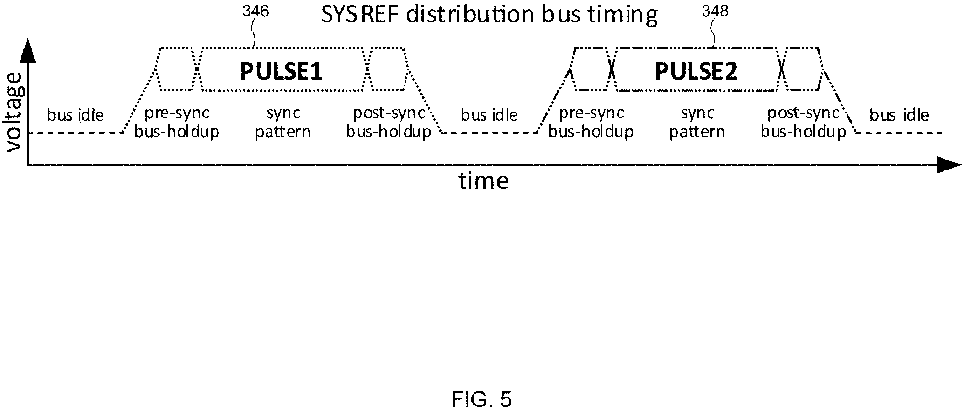

FIG. 5 is a timing diagram of the system reference clock signals (PULSE1 and PULSE2) 346, 348 transmitted on the daisy chain. The transmission line for the system reference clock signals 346, 348 is bidirectional between the transceiver devices 320a-320d in the forward and reverse directions.

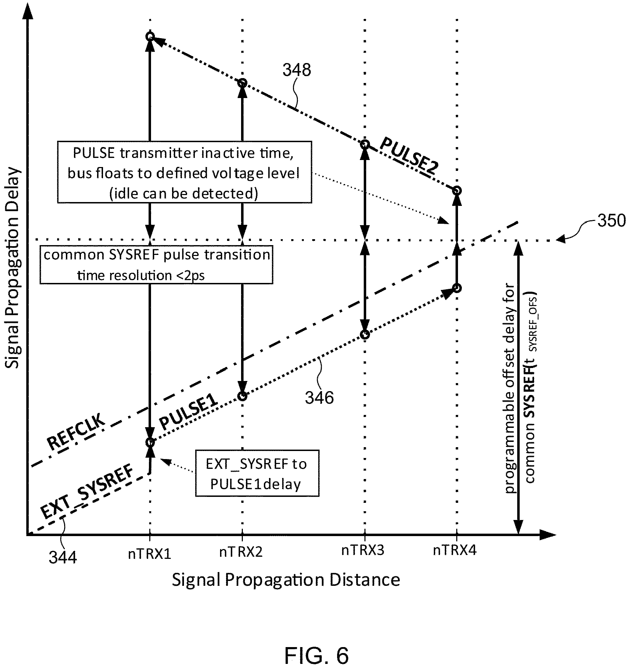

FIG. 6 shows propagation of the first and second system reference clock signals 346, 348 on a transmission line and the signal propagation delay of the first and second system reference clock signals 346, 348. The external system reference clock signal (EXT_SYSREF) 344 is directly connected to the first transceiver device 320a. The first transceiver device 320a receives the pulse of the external system reference clock signal (EXT_SYSREF) 344 and after a deterministic delay transmits the first system reference clock signal (PULSE1) 346 on the transmission line in a forward direction (from the first transceiver device 320a to the last transceiver device 320d in the daisy chain). The first system reference clock signal (PULSE1) 346 arrives at the second to fourth transceiver devices 320b-320d consecutively. After reception of the first system reference clock signal pulse in the last transceiver device 320d and the first transceiver device 320a releases the transmission line, and the last transceiver device 320d becomes a transmitter and transmits the second system reference clock signal (PLTLSE2) 348 in a reverse direction (from the last transceiver device 320d to the first transceiver device 320a). The pulse transmitter is inactive between arrival of the first system reference clock signal 346 at the last transceiver device 320d and transmission of the second system reference clock signal 348 by the last transceiver device 320d. The transmission line may float to a defined voltage level during this period and this idle can be detected by the transceiver devices 320a-320d. In each transceiver device 320a-320d, the pulse arrival times of the system reference clock signals 346, 348 are captured digitally and the average of the arrival times of the first and second system reference clock signals 346, 348 is determined. Each transceiver device 320a-320d detects digitally timing of the transition of the system reference clock signal pulses 346 and 348 and averages the detected transition timing of the system reference clock signal pulses 346 and 348. For example, the transition timing may be detected digitally in time resolution of less than 2 picoseconds. This average arrival time is common to all transceiver devices 320a-320d coupled in the daisy chain. FIG. 6 shows the calculated average arrival time 350 of the first and second system reference clock signals (PULSE1, PULSE2) 346, 348 at the transceiver devices 320a-320d (nTRX1-nTRX4).

In each transceiver device 320a-320d, the transition times ($t_{PULSE1}$, $t_{PULSE2}$) of the first and second system reference clock signals (PULSE1 and PULSE2) are measured (e.g., with about 2 ps resolution). The average of the detected transition times $t_{PULSE1}$ and $t_{PULSE2}$ is common to all transceiver devices 320a-320d in the system 300. Each transceiver device 320a-320d then generates an RF clock signal based on this average arrival time of the first and second system reference clock signals 346, 348. For example, in each transceiver device 320a-320d, the phase of the RF sampling clock signals generated for the data converters (ADCs and DACs) and RF clock signals for other processing components is aligned to the average arrival time of the first and second system reference clock signals 346, 348.

In each transceiver device 320a-320d, the phase of the RF clocks may be adjusted to be aligned to the system-wide common system reference signal timing, e.g., the average arrival time of the first and second system reference clock signals 346, 348. The system-wide common system reference signals may be generated by each transceiver device 320a-320d as follows:

$$t_{SYSREF\_MCS}(k+n) = (t_{PULSE1}(k)+t_{PULSE2}(k))/2 + nT_{SYSREF} + t_{SYSREF\_OFS},$$

where $t_{SYSREF\_MCS}(k+n)$ is the multi-device synchronized clock signal transition time at each transceiver, $t_{PULSE1}(k)$ and $t_{PULSE2}(k)$ are the first and second system reference clock signal arrival times, $T_{SYSREF}$ is the period of the system reference clock signal, $t_{SYSREF\_OFS}$ is a delay offset, and k and n are index. Programmable common and transceiver-specific delay offset ($t_{SYSREF\_OFS}$) may be optionally added to compensate for the synchronization signal propagation delay, IC timing, etc., or may be used for aligning the system-wide common system reference signals to the external system reference clock signal (FIG. 6, EXT_SYSREF) 344 or may be a generic programmable user offset delay. The period of the system reference clock signal $T_{SYSREF}$ may be calculated in each transceiver device 320a-320d from the measured arrival times of consecutive first and second system reference clock signals (PULSE1, PULSE2) 346, 348.

In this way, the transceiver devices 320a-320d may generate their individual RF clocks which are system-wide phase-aligned, without the need for any delay matched clock distribution. Each transceiver device 320a-320d may generate system-wide phase-aligned clock signals for local digital core in each transceiver device. In some examples, each transceiver device 320a-320d may optionally generate and provide a system-wide phase-aligned digital clock signal for the digital baseband processor 310.

After the phase alignment process, the external system reference clock (EXT_SYSREF) 344 may be switched off. Alternatively, for compensation of phase drift, e.g., due to temperature variation, the external system reference clock (EXT_SYSREF) 344 may be kept running or it may be switched on time after time for re-calibration/re-alignment.

In some examples, the measurement of the average arrival time of the first and second system reference clock signals may be repeated multiple times and the measurements may be averaged over time. Through long-term averaging of the system reference clock signal average arrival time measurements, phase alignment accuracy can be further enhanced.

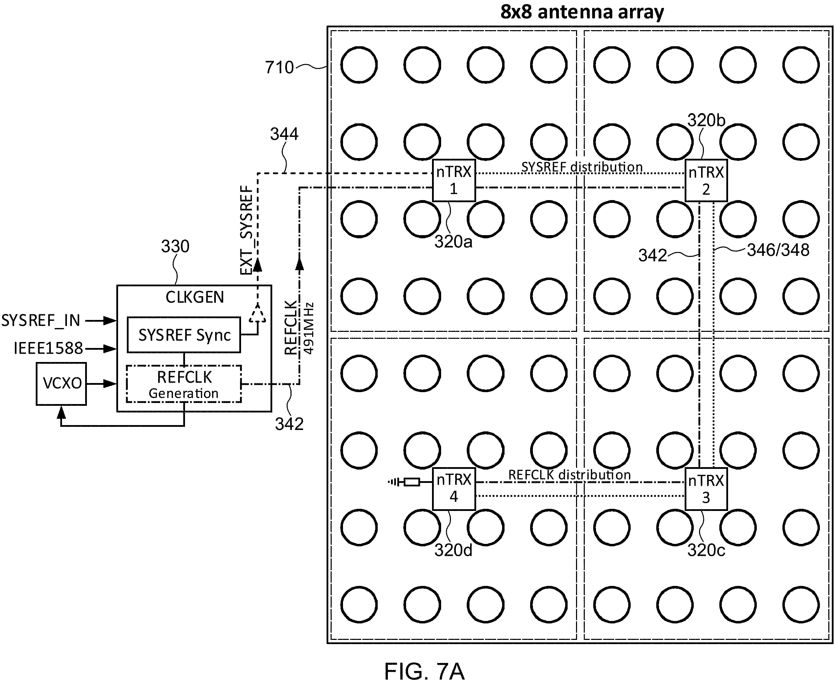

FIG. 7A shows an example implementation of a system with an 8×8 antenna array. In this example, the multi-device transceiver system includes four transceiver units 320a-320d. Each transceiver device 320a-320d may include 16 (or more) transmit/receive channels. The 8×8 antenna array 710 is divided into four 4×4 sub-arrays and each transceiver device 320a-320d covers one 4×4 sub-array. The transceiver devices 320a-320d are coupled in a daisy chain. The clock generator 330 generates a PLL reference clock signal (REFCLK) 342 and an external system reference clock signal (EXT_SYSREF) 344 and provide them to the first transceiver device 320a in the daisy chain as explained above. The external system reference clock signal 344 is connected only to the first transceiver device 320a. The PLL reference clock signal 342 and the system reference clock signals 346/348 may be routed via simple differential transmission lines and no delay matched/aligned distribution tree is needed. In each transceiver device 320a-320d, the phase of the RF clocks generated by the transceiver device 320a-320d is aligned to the system-wide common reference timing ($t_{SYSREF\_MCS}$), which is delay stable over temperature variation.

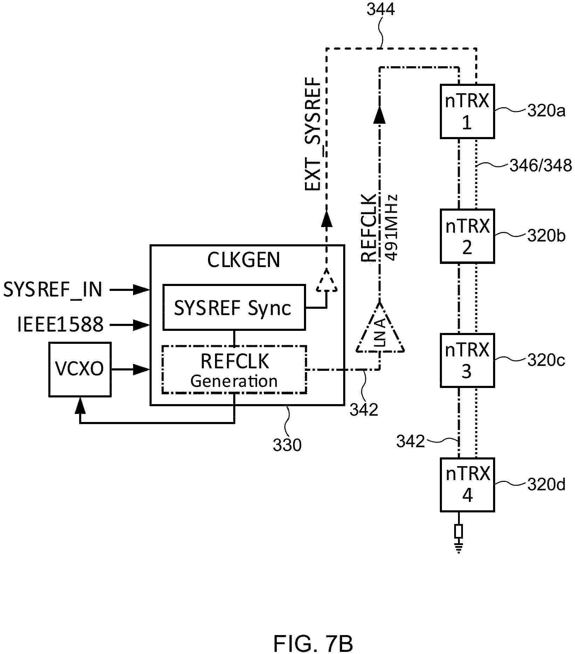

FIG. 7B shows an example clocking scheme for the 8×8 antenna array shown in FIG. 7A. Four transceiver devices 320a-320d are coupled in a daisy chain and the PLL reference clock 342 and the external system reference clock 344 are supplied to the first transceiver device 320a and the PLL reference clock signal 342 and the system reference clock signals 346, 348 may propagate via the daisy chain.

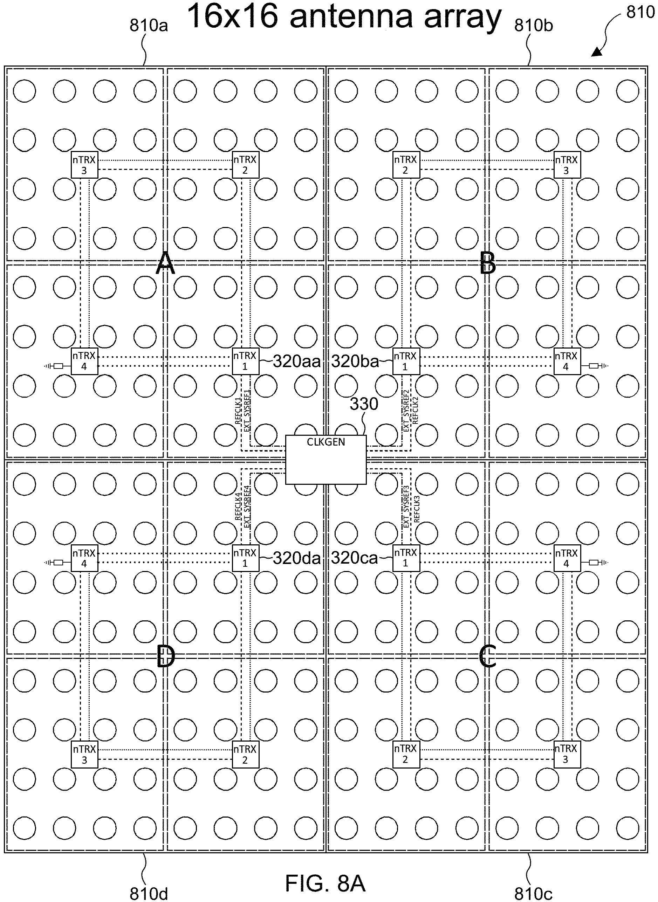

FIG. 8A shows an example implementation of the system with a 16×16 antenna array. The multi-device transceiver system includes sixteen (16) transceiver devices. Each transceiver device may include 16 (or more) transmit/receive channels. The 16×16 antenna array 810 is divided into four 8×8 sub-arrays 810a-810d and each 8×8 sub-array 810a-810d is further divided into four 4×4 sub-arrays. Each transceiver unit covers one 4×4 antenna sub-array. In this example, each 8×8 sub-array uses the clock distribution scheme as in examples disclosed herein. Four transceiver units for each 8×8 sub-array 810a-810d are coupled in a daisy chain and the clock generator 330 supplies a PLL reference clock signal (REFCLK) 342 and an external system reference clock signal (EXT_SYSREF) 344 to each first transceiver unit 320aa, 320ba, 320ca, 320da in the four daisy chains for four 8×8 sub-arrays 810a-810d. Phase alignment between the four 8×8 sub-arrays 810a-810d may be achieved by delay-matching the external system reference clock signals 344. In each 8×8 sub-array 810a-810d, the system-wide common reference timing ($t_{SYSREF\_MCS}$) is determined that is phase aligned to the corresponding external system reference signal (EXT_SYSREF1 to EXT_SYSREF4). Using this scheme, the system-wide common reference timing (common SYSREF_MCS) is aligned over all four 8×8 sub-arrays 810a-810d.

The PLL reference clock signal 342 supplied to the transceiver devices 320aa, 320ba, 320ca, 320da may or may not be delay matched. The phase of the RF clock signals generated in all transceiver units in all four 8×8 sub-arrays 810a-810d is aligned with the system-wide common reference timing (the common SYSREF_MCS), i.e., system-wide phased aligned RF clocks are generated. In this example, only one external clock distribution buffer (e.g., with 8 outputs) may be needed for distributing the PLL reference clock signals 342 and the external system reference clock signals 344 to the transceiver devices 320aa, 320ba, 320ca, and 320da.

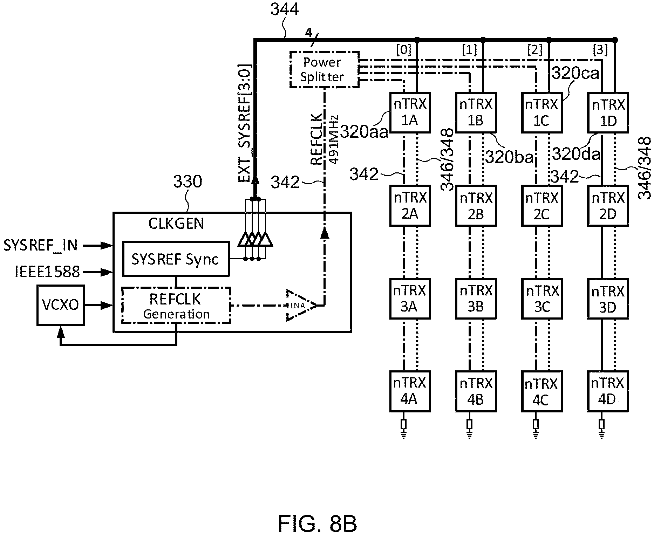

FIG. 8B shows an example clocking scheme for the 16×16 antenna array as shown in FIG. 8A. Four transceiver devices are coupled in a daisy chain for each 8×8 antenna sub-array 810a-810d and the PLL reference clock signal 342 and the external system reference clock signal 344 are supplied to each first transceiver device 320aa, 320ba, 320ca, 320da and propagates via the daisy chain. The external system reference clock signals 344 supplied to each first transceiver device 320aa, 320ba, 320ca, 320da may be delay-matched.

FIGS. 9 and 10 show one example of clock distribution in a multi-device system. In this example, both the external system reference clock signal 344 (and the system reference clock signals PULSE1 and PLTLSE2 346, 348) and the PLL reference clock signal (REFCLK) 342 are daisy-chained from the first transceiver device 320a to the fourth transceiver device 320d. FIG. 9 shows the case that each transceiver device 320a-320d includes two transceiver units (e.g., two transceiver chips in a single package or two systems on a single chip) and one baseband processor (BBP). One of the transceiver units in the first transceiver device 320a receives the external system reference signal 344 and generates and transmits a first system reference clock signal (PULSE1) 346 on the transmission line in a forward direction toward the fourth transceiver device 320d, and one of the transceiver units in the fourth transceiver device 320d generates and transmits a second system reference clock signal (PULSE2) 348 on the transmission line in a reverse direction toward the first transceiver device 320a. FIG. 10 shows the case that each transceiver device 320a-320d includes one transceiver unit and one BBP.

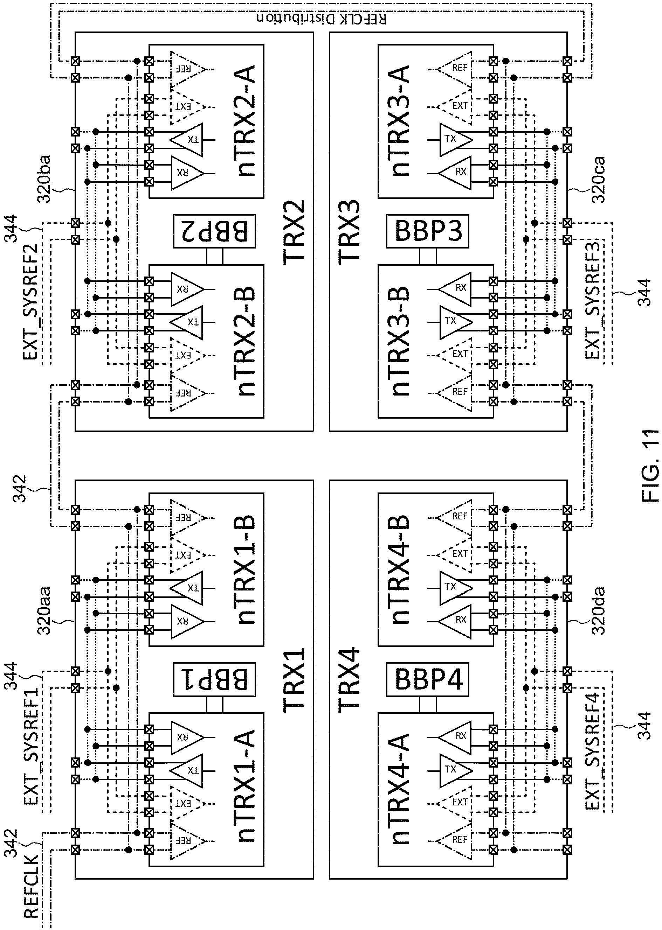

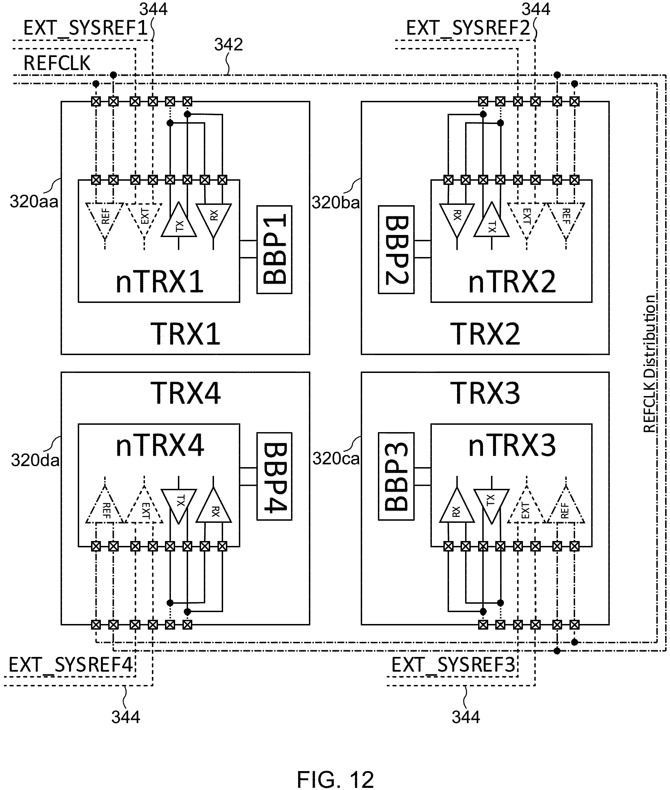

FIGS. 11 and 12 show an example of clock distribution in a multi-device system. This example may be applied to the 64-antenna system shown in FIGS. 8A and 8B for routing the PLL reference clock signal 342 and the external system reference clock signal 344 to each first transceiver device 320aa-320da in each set of four daisy-chained transceiver devices. In this example, the PLL reference clock signal (REFCLK) 342 is daisy-chained from the transceiver device 320aa to the transceiver device 320da, but the external system reference clock signal 344 is individually provided to each transceiver devices 320aa-320ad. The individual external system reference clock signals (EXT_SYSREF1-EXT_SYSREF4) may be routed delay matched or aligned through a phase shifter of a fanout buffer. FIG. 11 shows the case that each transceiver device 320aa-320da includes two transceiver units and one BBP and FIG. 12 shows the case that each transceiver device 320aa-320da includes one transceiver unit and one BBP.

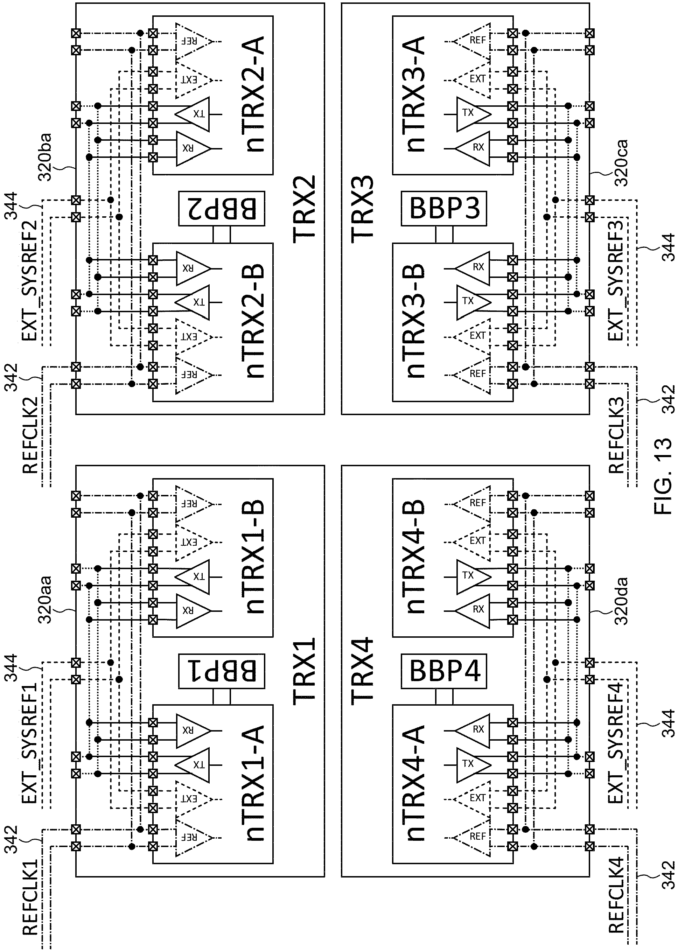

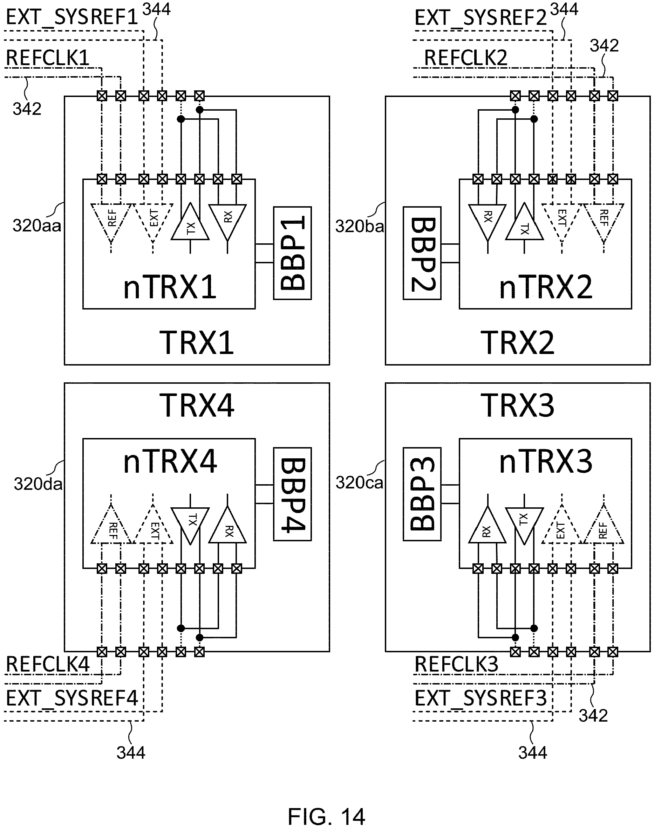

FIGS. 13 and 14 show another example of clock distribution in a multi-device system. This example may be applied to the 64-antenna system shown in FIGS. 8A and 8B for routing the PLL reference clock signal 342 and the external system reference clock signal 344 to each first transceiver device 320aa-320da in each set of four daisy-chained transceiver devices. In this example, both the external system reference clock signal 344 and the PLL reference clock signal (REFCLK) 342 are individually provided to the transceiver devices 320aa-320da. The individual system reference clock signals (EXT_SYSREF1-EXT_SYSREF4) may be routed delay matched or aligned through a phase shifter of a fanout buffer. The PLL reference clock signal 342 routed to the transceiver devices 320aa-320da may or may not be delay matched. FIG. 13 shows the case that each transceiver device includes two transceiver units and one BBP and FIG. 14 shows the case that each transceiver device includes one transceiver unit and one BBP.

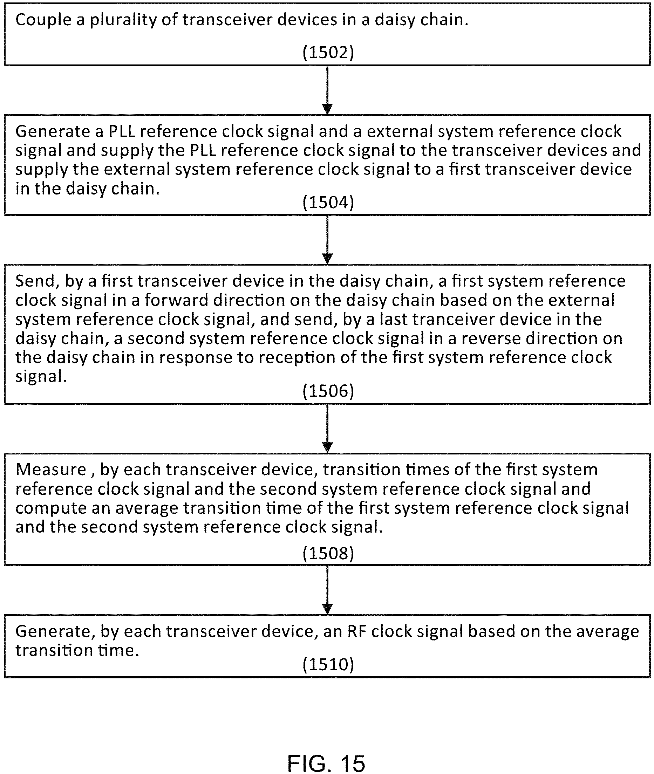

FIG. 15 is a flow diagram of an example method for clock distribution for multi-device synchronization. The method includes coupling a plurality of transceiver devices 320a-320d in a daisy chain (1502). Each transceiver device 320a-320d may include at least one transmit chain and at least one receive chain. The method includes generating a PLL reference clock signal 342 and an external system reference clock signal 344 and supplying the PLL reference clock signal 342 to the transceiver devices 320a-320d and supplying the external system reference clock signal 344 to a first transceiver device 320a in the daisy chain (1504). The method includes sending, by the first transceiver device 320a in the daisy chain, a first system reference clock signal 346 in a forward direction on the daisy chain based on the external system reference clock signal 344 and sending, by a last transceiver device 320d in the daisy chain, a second system reference clock signal 348 in a reverse direction on the daisy chain in response to reception of the first system reference clock signal 346 (1506). The method includes measuring, by each transceiver device 320a-320d, transition times of the first system reference clock signal 346 and the second system reference clock signal 348 and computing an average transition time of the first system reference clock signal 346 and the second system reference clock signal 348 (1508). The method includes generating, by each transceiver device 320a-320d, an RF clock signal based on the average transition time of the first system reference clock signal 346 and the second system reference clock signal 348 (1510).

The external system reference clock signal 344 is a system-wide reference clock signal for the plurality of transceiver devices 320a-320d. In some examples, the plurality of transceiver devices 320a-320d may be divided into a plurality of subsets and transceiver devices in each subset are coupled in the daisy chain, and the external system reference clock signal 344 may be sent to a first transceiver device 320aa-320da in the daisy chain in each subset after being delay-matched. In some examples, the average transition time of the first system reference clock signal 346 and the second system reference clock signal 348 may be measured multiple times and the average transition time measurements are averaged over time. In some examples, an offset may be added to the average transition time. In some examples, the method may further include generating, by each transceiver device 320a-320d, a baseband processor clock signal and a baseband processor system reference signal and sending the baseband processor clock signal and the baseband processor system reference signal to a digital baseband processor 310.

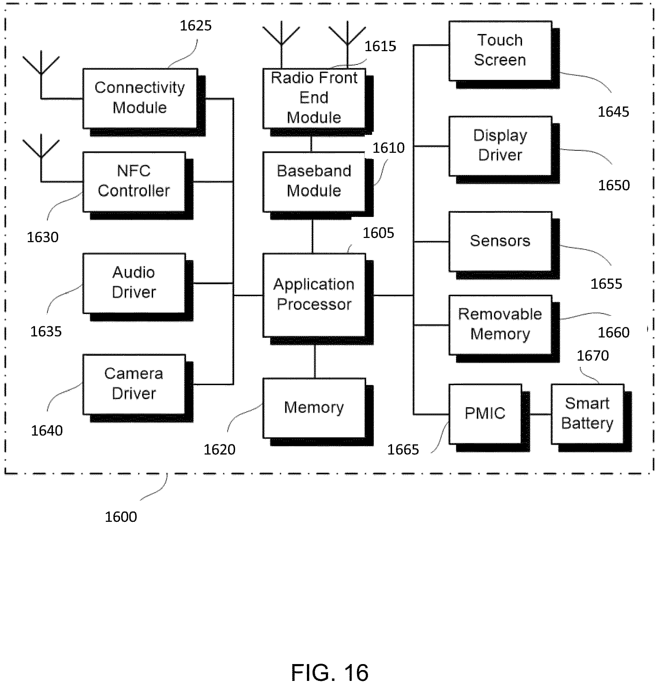

FIG. 16 illustrates a user device 1600 in which the examples disclosed herein may be implemented. For example, the examples disclosed herein may be implemented in the radio front-end module 1615, in the baseband module 1610, etc. The user device 1600 may be a mobile device, in some aspects and includes an application processor 1605, baseband processor 1610 (also referred to as a baseband module), radio front end module (RFEM) 1615, memory 1620, connectivity module 1625, near field communication (NFC) controller 1630, audio driver 1635, camera driver 1640, touch screen 1645, display driver 1650, sensors 1655, removable memory 1660, power management integrated circuit (PMIC) 1665 and smart battery 1670.

In some aspects, application processor 1605 may include, for example, one or more CPU cores and one or more of cache memory, low drop-out voltage regulators (LDOs), interrupt controllers, serial interfaces such as serial peripheral interface (SPI), inter-integrated circuit (I2C) or universal programmable serial interface module, real time clock (RTC), timer-counters including interval and watchdog timers, general purpose input-output (IO), memory card controllers such as secure digital / multi-media card (SD/MMC) or similar, universal serial bus (USB) interfaces, mobile industry processor interface (MIPI) interfaces and Joint Test Access Group (JTAG) test access ports.

In some aspects, baseband module 1610 may be implemented, for example, as a solder-down substrate including one or more integrated circuits, a single packaged integrated circuit soldered to a main circuit board, and/or a multi-chip module containing two or more integrated circuits.

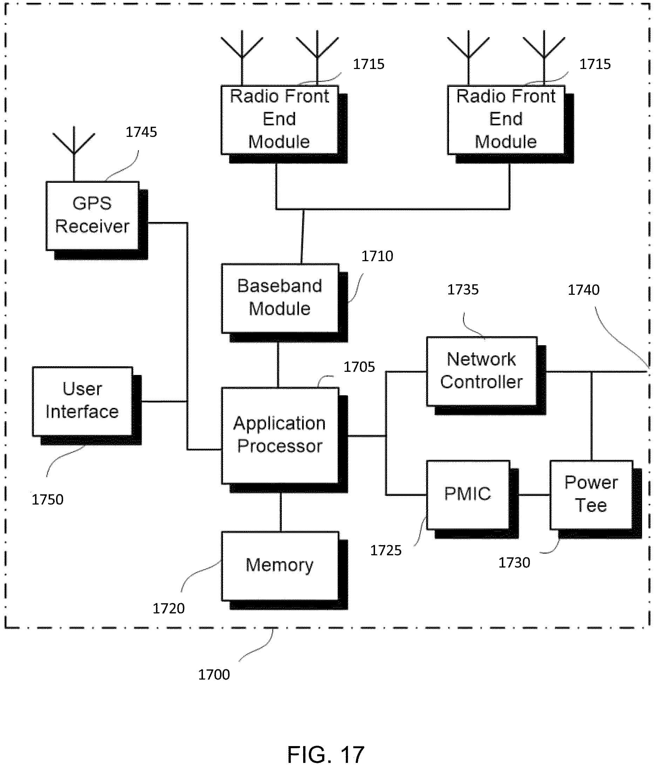

FIG. 17 illustrates a base station or infrastructure equipment radio head 1700 in which the examples disclosed herein may be implemented. For example, the examples disclosed herein may be implemented in the radio front-end module 1715, in the baseband module 1710, etc. The base station radio head 1700 may include one or more of application processor 1705, baseband modules 1710, one or more radio front end modules 1715, memory 1720, power management circuitry 1725, power tee circuitry 1730, network controller 1735, network interface connector 1740, satellite navigation receiver module 1745, and user interface 1750.

In some aspects, application processor 1705 may include one or more CPU cores and one or more of cache memory, low drop-out voltage regulators (LDOs), interrupt controllers, serial interfaces such as SPI, I2C or universal programmable serial interface module, real time clock (RTC), timer-counters including interval and watchdog timers, general purpose IO, memory card controllers such as SD/MMC or similar, USB interfaces, MIPI interfaces and Joint Test Access Group (JTAG) test access ports.

In some aspects, baseband processor 1710 may be implemented, for example, as a solder-down substrate including one or more integrated circuits, a single packaged integrated circuit soldered to a main circuit board or a multi-chip module containing two or more integrated circuits.

In some aspects, memory 1720 may include one or more of volatile memory including dynamic random access memory (DRAM) and/or synchronous dynamic random access memory (SDRAM), and nonvolatile memory (NVM) including high-speed electrically erasable memory (commonly referred to as Flash memory), phase change random access memory (PRAM), magneto resistive random access memory (MRAM) and/or a three-dimensional crosspoint memory. Memory 1720 may be implemented as one or more of solder down packaged integrated circuits, socketed memory modules and plug-in memory cards.

In some aspects, power management integrated circuitry 1725 may include one or more of voltage regulators, surge protectors, power alarm detection circuitry and one or more backup power sources such as a battery or capacitor. Power alarm detection circuitry may detect one or more of brown out (under-voltage) and surge (over-voltage) conditions.

In some aspects, power tee circuitry 1730 may provide for electrical power drawn from a network cable to provide both power supply and data connectivity to the base station radio head 1700 using a single cable.

In some aspects, network controller 1735 may provide connectivity to a network using a standard network interface protocol such as Ethernet. Network connectivity may be provided using a physical connection which is one of electrical (commonly referred to as copper interconnect), optical or wireless.

In some aspects, satellite navigation receiver module 1745 may include circuitry to receive and decode signals transmitted by one or more navigation satellite constellations such as the global positioning system (GPS), Globalnaya Navigatsionnaya Sputnikovaya Sistema (GLONASS), Galileo and/or BeiDou. The receiver 1745 may provide data to application processor 1705 which may include one or more of position data or time data. Application processor 1705 may use time data to synchronize operations with other radio base stations.

In some aspects, user interface 1750 may include one or more of physical or virtual buttons, such as a reset button, one or more indicators such as light emitting diodes (LEDs) and a display screen.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The examples as described herein may be summarized as follows:

An example (e.g., example 1) relates to a system for clock distribution for multi-device synchronization. The system includes a plurality of devices that are coupled in a daisy chain, and a clock generator configured to generate a PLL reference clock signal and an external system reference clock signal and supply the PLL reference clock signal to the devices and supply the external system reference clock signal to a first device in the daisy chain. The first device is configured to send a first system reference clock signal in a forward direction on the daisy chain based on the external system reference clock signal and a last device in the daisy chain is configured to send a second system reference clock signal in a reverse direction on the daisy chain in response to reception of the first system reference clock signal. Each device may be configured to measure transition times of the first system reference clock signal and the second system reference clock signal, compute an average transition time of the first system reference clock signal and the second system reference clock signal, and generate an RF clock signal based on the average transition time of the first system reference clock signal and the second system reference clock signal.

Another example, (e.g., example 2) relates to a previously described example (e.g., example 1), wherein the external system reference clock signal is a system-wide reference clock signal for the plurality of devices.

Another example, (e.g., example 3) relates to a previously described example (e.g., any one of examples 1-2), wherein the plurality of devices are divided into a plurality of subsets and devices in each subset are coupled in the daisy chain, and the external system reference clock signal is sent to a first device in the daisy chain in each subset, wherein the external system reference clock signal provided to the first device in each subset is delay-matched.

Another example, (e.g., example 4) relates to a previously described example (e.g., any one of examples 1-3), wherein each device may be configured to measure the average transition time of the first system reference clock signal and the second system reference clock signal multiple times and average the average transition time measurements over time.

Another example, (e.g., example 5) relates to a previously described example (e.g., any one of examples 1-4), wherein each device may be configured to add an offset to the average of the transition times.

Another example, (e.g., example 6) relates to a previously described example (e.g., any one of examples 1-5), wherein each device may be configured to generate a baseband processor clock signal and a baseband processor system reference signal and send the baseband processor clock signal and the baseband processor system reference signal to a digital baseband processor.

Another example, (e.g., example 7) relates to a previously described example (e.g., any one of examples 1-6), wherein the PLL reference clock signal distributed to the devices over a transmission line is not delay-matched.

Another example, (e.g., example 8) relates to a previously described example (e.g., any one of examples 1-7), wherein each device may include at least 16 transmit chains and at least 16 receive chains, and the number of devices is four (4) and each device is coupled to 16 antennas of an $8 \times 8$ antenna array or the number of devices is sixteen (16) and each device is coupled to 16 antennas of a $16 \times 16$ antenna array.

Another example, (e.g., example 9) relates to a method for clock distribution for multi-device synchronization. The method includes coupling a plurality of devices in a daisy chain, generating a PLL reference clock signal and an external system reference clock signal, supplying the PLL reference clock signal to the devices and supplying the external system reference clock signal to a first device in the daisy chain, sending, by a first device in the daisy chain, a first system reference clock signal in a forward direction on the daisy chain based on the external system reference clock signal, sending, by a last device in the daisy chain, a second system reference clock signal in a reverse direction on the daisy chain in response to reception of the first system reference clock signal, measuring, by each device, transition times of the first system reference clock signal and the second system reference clock signal, and computing an average transition time of the first system reference clock signal and the second system reference clock signal, and generating, by each device, an RF clock signal based on the average transition time of the first system reference clock signal and the second system reference clock signal.

Another example, (e.g., example 10) relates to a previously described example (e.g., example 9), wherein the external system reference clock signal is a system-wide reference clock signal for the plurality of devices.

Another example, (e.g., example 11) relates to a previously described example (e.g., any one of examples 9-10), wherein the plurality of devices are divided into a plurality of subsets and devices in each subset are coupled in the daisy chain, and the external system reference clock signal is sent to a first device in the daisy chain in each subset, wherein the external system reference clock signal provided to the first device in each subset is delay-matched.

Another example, (e.g., example 12) relates to a previously described example (e.g., any one of examples 9-11), wherein the average transition time of the first system reference clock signal and the second system reference clock signal is measured multiple times and the average transition time measurements are averaged over time.

Another example, (e.g., example 13) relates to a previously described example (e.g., any one of examples 9-12), wherein an offset is added to the average transition time.

Another example, (e.g., example 14) relates to a previously described example (e.g., any one of examples 9-13), wherein the PLL reference clock signal distributed to the devices over a transmission line is not delay-matched.

Another example, (e.g., example 15) relates to a machine-readable storage medium including code, when executed, to cause a machine to perform a method as in any one of examples 9-14.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**Claims**

1. A system for clock distribution for multi-device synchronization, comprising:

   a plurality of devices (320a-320d) that are coupled in a daisy chain;
   a clock generator (330) configured to generate a phase-locked loop, PLL, reference clock (342) signal and an external system reference clock signal (344) and supply the PLL reference clock signal (342) to the devices (320a-320d) and supply the external system reference clock signal (344) to a first device (320a) in the daisy chain; and
   wherein the first device (320a) is configured to send a first system reference clock signal (346) in a forward direction on the daisy chain based on the external system reference clock signal (344) and a last device (320d) in the daisy chain is configured to send a second system reference clock signal (348) in a reverse direction on the daisy chain in response to reception of the first system reference clock signal (346),
   wherein each device (320a-320d) is configured to measure transition times of the first system reference clock signal (346) and the second system reference clock signal (348), compute an average transition time of the first system reference clock signal (346) and the second system reference clock signal (348), and generate a radio frequency, RF, clock signal based on the average transition time of the first system reference clock signal (346) and the second system reference clock signal (348).

2. The system of claim 1, wherein the external system reference clock signal (344) is a system-wide reference clock signal for the plurality of devices (320a-320d).

3. The system as in any one of claims 1-2, wherein the plurality of devices (320a-320d) are divided into a plurality of subsets and devices in each subset are coupled in the daisy chain, and the external system reference clock signal (344) is sent to a first device (320aa-320da) in the daisy chain in each subset, wherein the external system reference clock signal (344) provided to the first device (320aa-320da) in each subset is delay-matched.

4. The system as in any one of claims 1-3, wherein each device (320a-320d) is configured to measure the average transition time of the first system reference clock signal (346) and the second system reference clock signal (348) multiple times and average the average transition time measurements over time.

5. The system as in any one of claims 1-4, wherein each device (320a-320d) is configured to add an offset to the average of the transition times.

6. The system as in any one of claims 1-5, wherein each device (320a-320d) is configured to generate a baseband processor clock signal and a baseband processor system reference signal and send the baseband processor clock signal and the baseband processor system reference signal to a digital baseband processor (310).

7. The system as in any one of claims 1-6, wherein the PLL reference clock signal (342) distributed to the devices (320a-320d) over a transmission line is not delay-matched.

8. The system as in any one of claims 1-7, wherein each device (320a-320d) includes at least 16 transmit chains and at least 16 receive chains, and the number of devices is four (4) and each device is coupled to 16 antennas of an 8×8 antenna array or the number of devices is sixteen (16) and each device is coupled to 16 antennas of a 16×16 antenna array.

9. A method for clock distribution for multi-device synchronization, comprising:

coupling a plurality of devices (320a-320d) in a daisy chain;
generating a phase locked loop, PLL, reference clock signal (342) and an external system reference clock signal (344);
supplying the PLL reference clock signal (342) to the devices (320a-320d) and supplying the external system reference clock signal (344) to a first device (320a) in the daisy chain;
sending, by a first device (320a) in the daisy chain, a first system reference clock signal (346) in a forward direction on the daisy chain based on the external system reference clock signal (344);
sending, by a last device (320d) in the daisy chain, a second system reference clock signal (348) in a reverse direction on the daisy chain in response to reception of the first system reference clock signal (346);
measuring, by each device (320a-320d), transition times of the first system reference clock signal (346) and the second system reference clock signal (348), and computing an average transition time of the first system reference clock signal (346) and the second system reference clock signal (348); and
generating, by each device (320a-320d), a radio frequency, RF, clock signal based on the average transition time of the first system reference clock signal (346) and the second system reference clock signal (348).

10. The method of claim 9, wherein the external system reference clock signal (344) is a system-wide reference clock signal for the plurality of devices (320a-320d).

11. The method as in any one of claims 9-10, wherein the plurality of devices (320a-320d) are divided into a plurality of subsets and devices in each subset are coupled in the daisy chain, and the external system reference clock signal (344) is sent to a first device (320aa-320da) in the daisy chain in each subset, wherein the external system reference clock signal (344) provided to the first device (320aa-320da) in each subset is delay-matched.

12. The method as in any one of claims 9-11, wherein the average transition time of the first system reference clock signal (346) and the second system reference clock signal (348) is measured multiple times and the average transition time measurements are averaged over time.

13. The method as in any one of claims 9-12, wherein an offset is added to the average transition time.

14. The method as in any one of claims 9-13, wherein the PLL reference clock signal (342) distributed to the devices (320a-320d) over a transmission line is not delay-matched.

15. A machine-readable storage medium including code, when executed, to cause a machine to perform a method as in any one of claims 9-14.

FIG. 1

200

FIG. 2

FIG. 3

FIG. 4

SYSREF distribution bus timing

FIG. 5

EP 4 328 706 A1

FIG. 6

FIG. 7A

FIG. 7B

# 16x16 antenna array

FIG. 8A

FIG. 8B

FIG. 9

FIG. 10

FIG. 11

FIG. 12

FIG. 13

FIG. 14

Couple a plurality of transceiver devices in a daisy chain.

(1502)

Generate a PLL reference clock signal and a external system reference clock signal and supply the PLL reference clock signal to the transceiver devices and supply the external system reference clock signal to a first transceiver device in the daisy chain.

(1504)

Send, by a first transceiver device in the daisy chain, a first system reference clock signal in a forward direction on the daisy chain based on the external system reference clock signal, and send, by a last tranceiver device in the daisy chain, a second system reference clock signal in a reverse direction on the daisy chain in response to reception of the first system reference clock signal.

(1506)

Measure , by each transceiver device, transition times of the first system reference clock signal and the second system reference clock signal and compute an average transition time of the first system reference clock signal and the second system reference clock signal.

(1508)

Generate, by each transceiver device, an RF clock signal based on the average transition time.

(1510)

FIG. 15

FIG. 16

FIG. 17

Europäisches
Patentamt

European
Patent Office

Office européen
des brevets

**EUROPEAN SEARCH REPORT**

Application Number

EP 22 19 2389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/019984 A1 (MICROCHIP TECH INC [US]) 27 January 2022 (2022-01-27) * paragraph [0007] – paragraph [0008] * * paragraph [0022] – paragraph [0026] * * paragraph [0032] * * figure 1 * | 1-15 | INV. G06F1/10 H04B1/00 H04B7/0413 |
| A | NARENDRA ANAND ET AL: "The case for UHF-band MU-MIMO", MOBILE COMPUTING AND NETWORKING, ACM, 2 PENN PLAZA, SUITE 701 NEW YORK NY 10121-0701 USA, 7 September 2014 (2014-09-07), pages 29-40, XP058055520, DOI: 10.1145/2639108.2639144 ISBN: 978-1-4503-2783-1 * section 3.1.3 * * section 3.2 * * figure 4 * | 1-15 | |
| A | US 2021/376837 A1 (JACQUET DAVID FRANCOIS [FR] ET AL) 2 December 2021 (2021-12-02) * paragraph [0018] * * paragraph [0024] – paragraph [0026] * * paragraph [0043] * * paragraph [0080] – paragraph [0081] * * figures 1,2A,7 * | 1-15 | TECHNICAL FIELDS SEARCHED (IPC) H04B G06F H04J |

The present search report has been drawn up for all claims

| Place of search | Date of completion of the search | Examiner |
|---|---|---|
| The Hague | 31 January 2023 | Marongiu, M |

EPO FORM 1503 03.82 (P04C01)

## ANNEX TO THE EUROPEAN SEARCH REPORT
## ON EUROPEAN PATENT APPLICATION NO.

EP 22 19 2389

This annex lists the patent family members relating to the patent documents cited in  the above-mentioned European search report.
The members are as contained in the European Patent Office EDP file on
The European Patent Office is in no way liable for these particulars which are merely given for the purpose of information.

31-01-2023

| Patent document cited in search report | | Publication date | Patent family member(s) | | Publication date |
|---|---|---|---|---|---|
| WO 2022019984 | A1 | 27-01-2022 | DE | 112021002267 T5 | 26-01-2023 |
| | | | US | 2022029778 A1 | 27-01-2022 |
| | | | WO | 2022019984 A1 | 27-01-2022 |
| US 2021376837 | A1 | 02-12-2021 | US | 11133806 B1 | 28-09-2021 |
| | | | US | 2021376837 A1 | 02-12-2021 |
| | | | US | 2022231691 A1 | 21-07-2022 |

EPO FORM P0459

For more details about this annex : see Official Journal of the European Patent Office, No. 12/82